# EUROPEAN PATENT APPLICATION

(11) **EP 4 810 364 A1**
(43) Date of publication of application: **23.09.2026**
(21) Application number: 26165942.9
(22) Date of filing: 19.03.2026
(51) Int. Cl.: B62M 9/00, B62M 9/10

(54) **BICYCLE SPROCKET**

(30) Priority: 21.03.2025 IT 202500005865
(71) Applicant: Campagnolo S.r.l., 36100 Vicenza (VI) (IT)
(72) Inventor: Meggiolan, Mario, 36051 Creazzo (IT); Bisarello, Filippo, 36030 Costabissara (IT); Feltrin, Mauri, 36024 Nanto (IT)

(57) **Abstract**

A bicycle sprocket comprising an outer ring comprising a first material and including: a plurality of teeth formed along an outer circumference of the outer ring, a plurality of through holes formed in a region of the outer ring located at a distance from the centre of the sprocket less than the radius of the outer circumference; an inner ring comprising a second material, different from and lighter than the first material, and a connection portion configured to fix the inner ring to a spider or a crank arm, wherein the inner ring extends into the through holes and is permanently fixed to the outer ring without the use of external fastening elements, and wherein the connection portion is entirely made from the second material and does not include the first material.

## Description

### TECHNICAL FIELD

The present invention relates to a bicycle sprocket forming part of the bicycle transmission system and configured to transfer, through engagement with a chain, the force exerted by the cyclist on the pedals to the rear wheel of the bicycle.

### STATE OF THE ART

Typically, the term bicycle sprocket is intended to mean either a toothed wheel connected to a crank, in which case the sprocket is commonly referred to as a chainring, or a toothed wheel directly connected to the rear wheel, in which case the sprocket is commonly referred to as a pinion.

In the first case, the sprocket is intended to drive the bicycle chain for transmitting motion to the rear wheel of the bicycle; in the second case, the sprocket is intended to be driven by the chain and, in turn, to transmit motion to the rear wheel of the bicycle.

Traditionally, conventional sprockets are entirely made of metallic material, usually aluminium or titanium or a metal alloy. The metallic material provides particular resistance to the stresses and forces exerted on the sprocket itself by the cyclist through the crank, in the case of the chainring, or through the chain, in the case of the pinion. Furthermore, teeth made of metallic material are capable of providing particular resistance to wear due to the continuous contact of the teeth with the chain.

In recent years, the bicycle sector has paid particular attention to maximizing the overall energy efficiency of the bicycle. In particular, much emphasis has been placed on minimizing the weight of the bicycle. In this respect, the use of sprockets made of lightweight alloys, such as aluminium alloys, and also of sprockets made partly of metallic material and partly of another material, such as composite material, for example carbon fibre, is known.

US 11,009,112 B2 describes a bicycle chainring having an outer portion made of metallic material and an inner portion made of composite material, wherein the inner portion made of composite material comprises a metallic connection element for connecting the chainring to the crank or to the spindle.

US 2007/0265122 A1 describes a sprocket comprising an outer metallic ring on which the teeth are formed and a non-metallic inner part. The metallic ring comprises connection elements, also metallic, for connection to the spider or to the crank.

US 2018/0283520 A1 describes an assembly of pinions supported by a support element. The pinions are made of metallic material, while the support element comprises non-metallic material. The support element further comprises a metallic reinforcing member for connecting the assembly of pinions to the freehub body of the rear wheel.

The Applicant has observed that, in the prior art, the use of composite material for reducing the total weight of the sprocket has been limited to a minimal portion of the overall sprocket, which nevertheless includes a substantial percentage of metallic material.

The technical problem underlying the present invention is to reduce the weight of the sprocket without penalizing, or even improving, the resistance of the sprocket to the forces and stresses exerted on the sprocket itself.

An object of the present invention is therefore to provide a bicycle sprocket capable of satisfying the above-mentioned requirements.

### SUMMARY OF THE INVENTION

In accordance with the above-mentioned objectives, according to the present invention there is provided a bicycle sprocket as defined in claim 1 and preferably, but not necessarily, in any of the claims dependent thereon.

In accordance with the above-mentioned objectives, according to another aspect of the present invention there is provided a process for manufacturing a bicycle sprocket as defined in claim 14 and preferably, but not necessarily, in the claim dependent thereon.

### BRIEF DESCRIPTION OF THE DRAWINGS

The claims describe preferred embodiments of the present invention and form an integral part of the present description. Further features and advantages of the present invention will become more apparent from the following detailed description of some preferred embodiments thereof, given with reference to the accompanying drawings. In these drawings:
Figure 1 shows a view of a sprocket, in particular a chainring, connected to a crank;
Figure 2 shows a front view and a side view of a sprocket, in particular a chainring, according to an example of the invention;
Figure 3 shows a front view of the sprocket of Figure 2 in which the outer ring and the inner ring are shown separately;
Figure 4 shows a front view of the sprocket of Figure 1 and two partial cross-sections transverse to the plane of the sprocket;
Figure 5 shows a schematic view of the layered structure of the inner ring;
Figure 6 shows a schematic view of the reinforcing element alone and of its position when inserted in the sprocket;
Figure 7 schematically shows a block diagram of the manufacturing process of the sprocket according to an example of the invention.

### DETAILED DESCRIPTION

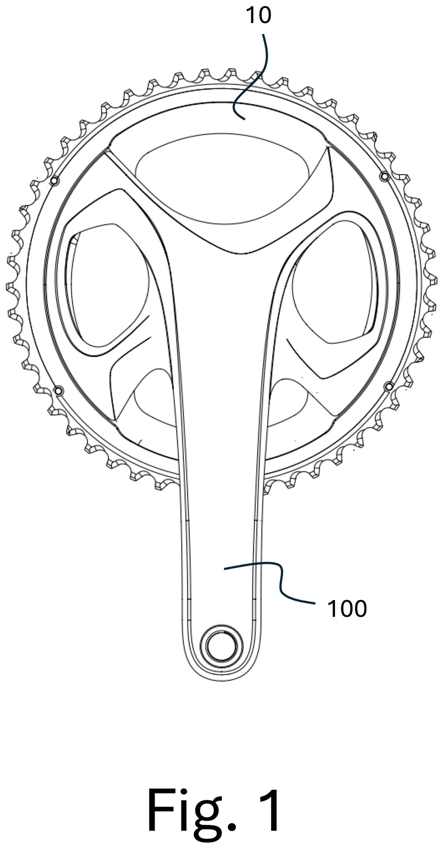

Figure 1 shows a sprocket 10 typically used in a transmission of a bicycle with human or electric propulsion, or a combination of the two. The sprocket 10 is connected to a crank arm 100, directly or via a spider. The sprocket 10 transfers the power exerted by a cyclist on the crank arm 100 to a chain (not shown in the figure) of the transmission system of a bicycle, which in turn transmits the motion to the rear wheel of the bicycle.

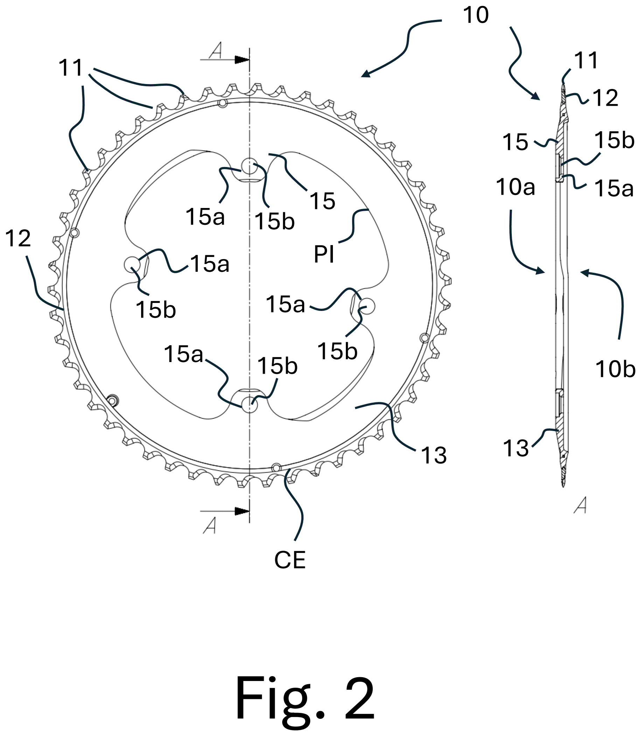

Figure 2 shows a front view and a cross-section of an example of a sprocket 10, disconnected from the crank arm 100, typically used in a transmission of a vehicle, such as a bicycle, a motorcycle, or any other vehicle with an internal combustion engine, an electric motor, or a combination of the two, or with human propulsion. In the remainder of the text, reference will be made, for simplicity, to a sprocket 10 for a bicycle. A person skilled in the art will understand that this example is used solely for descriptive purposes and is not to be considered limiting.

The sprocket 10 comprises an outer ring 12 and an inner ring 13, positioned internally to the outer ring 12 with respect to the centre of the sprocket 10.

The outer ring 12 comprises a plurality of teeth 11 formed on an outer circumference CE. The teeth 11 are configured, dimensioned, and shaped to engage a chain (not shown) of the vehicle transmission system and to transfer a torque from the sprocket to the chain.

The sprocket 10 lies on a plane, hereinafter defined as the plane of the sprocket 10. The plane of the sprocket 10 defines an inner face 10a and an outer face 10b of the sprocket 10. Typically, when the sprocket 10 is mounted on the bicycle, the inner face 10a is the face of the sprocket 10 facing the frame of the bicycle, whereas the outer face 10b is the face of the sprocket 10 facing the outside of the bicycle.

Similarly, the axis of the sprocket 10 is defined as the line passing through the centre of the sprocket 10 and perpendicular to the plane of the sprocket 10.

In the present description, the term "axial direction" will refer to any direction parallel to the axis of the sprocket 10, i.e., perpendicular to the plane of the sprocket 10.

Furthermore, the term "radial direction" will refer to any direction perpendicular to the axis of the sprocket 10, i.e., parallel to the plane of the sprocket 10.

The teeth 11, formed on the outer circumference CE of the sprocket 10 and integrally formed with the outer ring 12, are dimensioned and shaped to engage the chain. It will be clear to a person skilled in the art that the number, size, structure, shape, and distribution, whether uniform or non-uniform, of the teeth 11 may vary depending on technical requirements and on the type of chain or transmission of the vehicle. For this reason, the shape, number, structure, and arrangement of the teeth 11 will not be discussed further, as they form part of the common general knowledge of the person skilled in the art.

The outer ring 12, including the teeth 11 forming an integral part thereof, comprises a first material having high hardness, such as steel, aluminium, titanium, or another metal or metal alloy. Optionally, the outer ring 12 is made entirely of the first material.

The inner ring 13 comprises a second material having lower hardness and lower elasticity than the first material of the outer ring 12, such as a polymer, a plastic, a fiber-reinforced plastic, a composite material comprising resins or polymers and fibers, for example a composite material comprising a fiber-filled thermoplastic polymer.

The term second material generally indicates a material different from the first material of the outer ring 12. The second material may comprise a plurality of materials, for example a plurality of layers of material different from the first material. In one example, the second material may comprise a plurality of composite materials optionally comprising a thermoplastic polymer and fibers.

Throughout the present description, the term "fibers" is intended to identify carbon fibers, glass fibers, or fibers made of another material.

Optionally, the inner ring 13 is made entirely of the second material.

Optionally, the inner ring 13 is entirely made of the second material. In other words, the inner ring 13 does not comprise the first material.

The second material may comprise a plurality of layers of materials that are the same as or different from one another, in any case different from the first material, as will be described in greater detail below.

In all the examples that will be described, the outer ring 12, and therefore the teeth 11, comprise a material having a hardness such as to allow the teeth 11 to resist friction and erosion caused by the transmission chain. Conversely, the inner ring 13, made of a lighter material, i.e., having a lower specific weight than the material of the outer ring 12, provides structural support to the outer ring 12 while at the same time allowing the total weight of the sprocket 10 to be contained and providing a sprocket 10 that is resistant to the application of stresses, forces, and torques.

The advantage is therefore to provide a sprocket 10 having a limited weight without reducing the resistance of the sprocket 10 to the forces acting thereon.

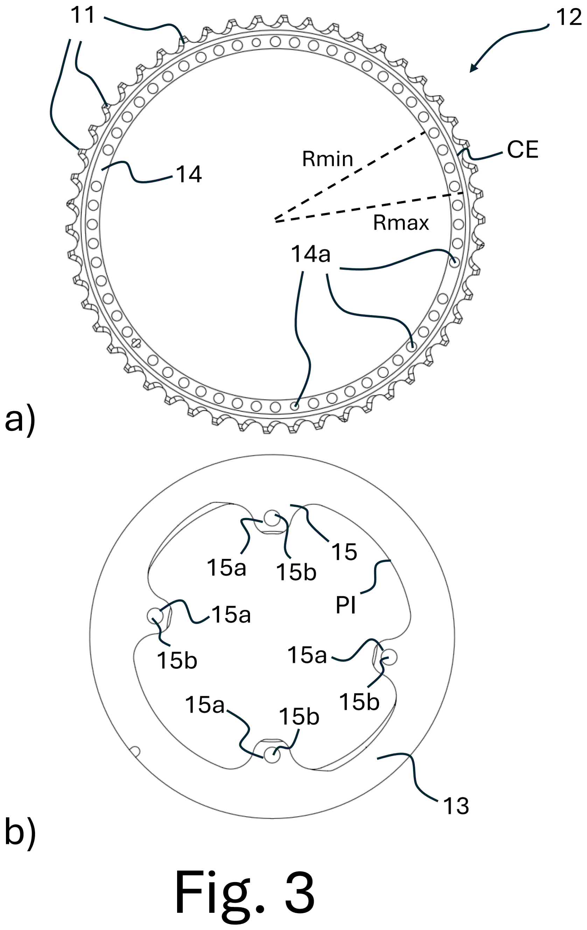

Figure 3 separately shows the outer ring 12, panel a), and the inner ring 13, panel b), of the sprocket 10 of Figure 2. When the sprocket 10 is assembled, the inner ring 13 and the outer ring 12 overlap one another, when viewed from a direction perpendicular to the plane defined by the sprocket 10, at least partially within a coupling region 14 of the outer ring 12.

The coupling region 14 is substantially a circular crown extending from a minimum distance Rmin to a maximum distance Rmax from the center of the sprocket 10. The maximum distance Rmax is less than or equal to the radius of the outer circumference CE of the outer ring 12, i.e., of the sprocket 10, on which the teeth 11 are formed.

The inner ring 13 further comprises a connection portion 15 configured to allow the sprocket to be connected to a driving element (not shown in Figures 2 and 3), such as a crank arm, for example the crank arm 100 of Figure 1, a spider, or the like, which transfers motion from a propulsion element, such as an internal combustion engine, an electric motor, or muscular force, in the case of human-powered vehicles, or a combination of the two, to the sprocket 10.

The connection portion 15 is located at a position on the sprocket 10 that is radially internal with respect to the outer circumference CE thereof.

The connection portion 15 is located at a distance from the center of the sprocket 10 that is less than the minimum radius Rmin of the coupling region 14 of the outer ring 12 and does not overlap, when viewed along a direction parallel to the axis of the sprocket 10, with the outer ring 12. In other words, when viewed along a direction parallel to the axis of the sprocket 10, there is no overlap between the first material of the outer ring 12 and the second material of the connection portion 15 of the inner ring 13.

The connection portion 15 comprises at least one engagement element 15a, optionally a plurality of engagement elements 15a, which allows the sprocket to be fixed to the driving element by means of fastening means such as screws, bolts, adhesives, and the like.

The at least one engagement element 15a comprises at least one through hole 15b for connecting the sprocket to the driving element, for example a crank arm, such as the crank arm 100 of Figure 1, or a spider.

In the example shown in Figures 2 and 3, the connection portion 15 comprises four engagement elements 15a for the connection between the sprocket 10 itself and a crank arm or a spider. The engagement elements 15a protrude radially toward the center of the sprocket 10 and are located at a distance from the center of the sprocket 10 that is smaller than the minimum distance at which the remainder of the inner ring 13 is located with respect to the center of the sprocket 10.

It will be clear to a person skilled in the art that the number of engagement elements 15a shown in Figures 2 and 3 is purely arbitrary and that a sprocket having a smaller or greater number of engagement elements 15a falls within the scope of the present invention.

The inner ring 13 and the outer ring 12 are fixed to one another in a non-removable manner without the use of external fastening elements, such as screws, bolts, adhesives, and the like, and overlap one another, when viewed from a direction perpendicular to the plane defined by the sprocket 10, at least partially within a coupling region 14 of the outer ring 12.

The coupling region 14 defines a portion of a surface of the outer ring 12 that comes into contact with the inner ring 13.

The inner ring 13 overlaps, at least partially, when viewed from a direction perpendicular to the plane on which the sprocket 10 lies, with the coupling region 14 of the outer ring 12.

A plurality of through holes 14a are formed in the coupling region 14. The through holes 14a perform the function of gripping elements for the inner ring 13 on the outer ring 12.

The second material of the inner ring 13 penetrates into the through holes 14a and fixes the inner ring 13 to the outer ring 12, without the use of external fastening elements such as screws, bolts, adhesives, and the like.

The outer ring 12 has the function of providing the teeth made of a hard and resistant material, namely the first material, and of providing elements, for example the through holes 14a, which allow the inner ring 13 to be fixed thereto.

The inner ring 13, on the other hand, has the function of providing a mechanical structure to the sprocket 10. In other words, the inner ring 13, which is volumetrically larger than the outer ring 12, enables the sprocket 10 to withstand the forces exerted on the driving element, for example the crank arm 100 of Figure 1, and transmitted therefrom to the sprocket 10.

The fact that the inner ring 13 is volumetrically larger than the outer ring 12 and comprises a material, the second material, that is lighter, i.e., having a lower specific weight, than the first material of the outer ring 12 allows the sprocket 10 to have a particularly reduced weight compared with, for example, other sprockets that are entirely metallic, or sprockets comprising a combination of metallic and non-metallic materials currently known in the prior art.

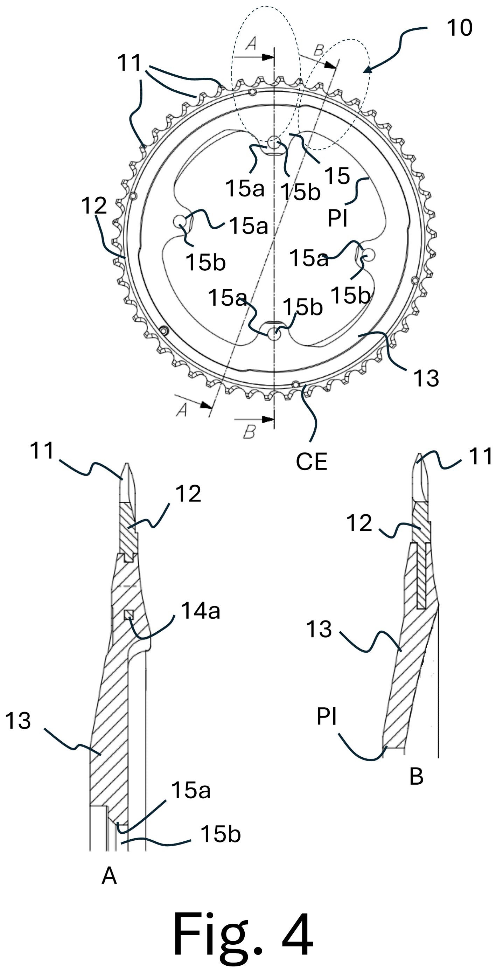

Figure 4 shows the sprocket 10 of Figures 2 and 3 in a front view and two partial cross-sections A and B along two diameters of the sprocket 10. Section A corresponds to the section comprising the engagement elements 15a and the through holes 14a, whereas section B corresponds to a portion of the sprocket 10 that comprises neither the engagement elements 15a nor the through holes 14a.

During the production of the sprocket 10, the material of the inner ring 13, namely the second material, penetrates into the through holes 14a in order to irreversibly fix the inner ring 13 to the outer ring 12.

The second material may comprise a composite material including fibers, for example glass fibers, carbon fibers, or fibers made of another material, incorporated in a polymer, for example a resin or a thermoplastic polymer.

The composite material may comprise fibers incorporated in a polymer, for example a resin or a thermoplastic polymer, which extend substantially parallel to a predefined direction, thereby providing strength and resistance along such direction. In this case, reference is made to a unidirectional composite material.

In another example, the composite material may be made with fibers incorporated in a polymer, for example a resin or a thermoplastic polymer, woven according to at least two intersecting directions so as to form a fabric. The interweaving of the fibers creates a lattice of cells having a substantially quadrangular shape. In the remainder of the description, reference will be made to this type of composite material by the term "fabric". The fabric provides resistance to forces along the at least two directions defined by the fibers themselves.

The second material may comprise a single layer, made of unidirectional composite material or fabric composite material, or it may comprise a plurality of layers of fabric composite material, unidirectional composite material, or a combination of the two, i.e., at least one layer of fabric material and at least one layer of unidirectional material.

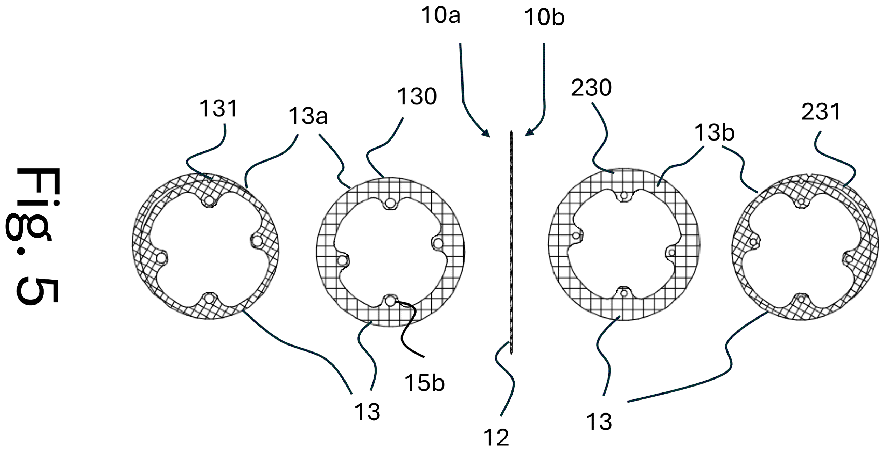

Figure 5 shows an example of a sprocket 10 in which the outer ring 12 is shown in a side view and the inner ring 13 is shown in a front view and separated into a plurality of layers 130, 131, 230, and 231.

In the example shown in Figure 5, the layer 130 is arranged above the outer ring 12 so as to overlap the coupling region 14 of the outer ring 12 at the inner face 10a.

Optionally, an additional layer 131 is placed above the layer 130 so that the holes 15b are aligned in order to form, when the sprocket 10 is completed, the engagement elements 15a.

Similarly, in the example shown in Figure 5, the layer 230 is arranged above the outer ring 12 so as to overlap the coupling region 14 of the outer ring 12 at the outer face 10b.

Optionally, an additional layer 231 is placed above the layer 230 so that the holes 15b are aligned in order to form, when the sprocket 10 is completed, the engagement elements 15a.

The alignment of the holes 15b concerns all the layers 130, 230, 131, and 231 forming the inner ring 13.

In other words, as shown in Figure 5, the inner ring 13 comprises at least two layers 130 and 230 of second material positioned on two opposite faces of the outer ring 12, respectively the inner face 10a and the outer face 10b, so as to form a sandwich structure therewith. The outer ring 12 is thus interposed between the at least two layers 130 and 230 of second material of the inner ring 13.

In this example, during the production of the sprocket 10, the at least two layers 130 and 230 penetrate into the through holes 14a and join together so as to form a continuous structure. In this way, the inner ring 13 is irreversibly coupled to the outer ring 12.

The at least two layers 130 and 230 of second material optionally comprise a composite material including carbon fibers, glass fibers, or fibers made of another material. In this case, the fibers present at the inner face 10a and at the outer face 10b penetrate, during the production of the sprocket 10, into the through holes 14a, forming, together with the resin or polymer of the composite material, a continuous structure capable of irreversibly fixing the inner ring 13 to the outer ring 12.

In one example, the at least two layers 130 and 230 comprise fabric composite material.

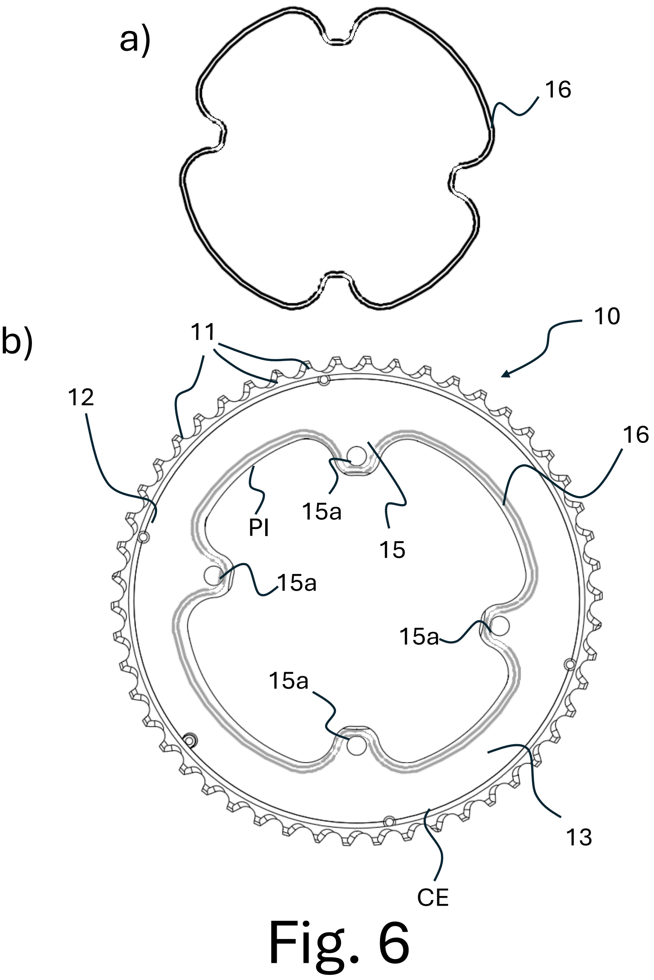

In another example, schematically shown in Figure 6, the at least two layers comprise unidirectional composite material.

In a further example, at least one layer 130 and 230 of the at least two layers of second material comprises fabric composite material, while at least another layer 132 of the at least two layers of material comprises unidirectional composite material.

In a further example, the inner ring 13 comprises a first plurality 13a of layers 130 and 131 positioned at the inner face 10a of the sprocket 10. The layers 130 and 131 of the first plurality 13a comprise a composite material.

Optionally, the inner ring 13 comprises a second plurality 13b of layers 230 and 231 positioned at the outer face 10b of the sprocket 10. The layers 230 and 231 of the second plurality 13b comprise a composite material.

When the sprocket 10 is completed, the outer ring 12 is interposed between the first plurality 13a and the second plurality 13b of layers 130, 131, 230, and 231.

In this example, during the production of the sprocket 10, the material of at least one layer of each of the first plurality 13a and the second plurality 13b of layers penetrates into the through holes 14a and joins together to form a continuous structure. In this way, the inner ring 13 is irreversibly coupled to the outer ring 12.

The layers 130, 131, 230, and 231 of the first plurality 13a and of the second plurality 13b optionally comprise a composite material including carbon fibers, glass fibers, or fibers made of another material. In this case, the fibers present at the inner face 10a and at the outer face 10b penetrate, during the production of the sprocket 10, into the through holes 14a, forming, together with the resin or polymer of the composite material, a continuous structure capable of irreversibly fixing the inner ring 13 to the outer ring 12.

In one example, at least one of the layers 130, 131, 230, and 231 of the first plurality 13a and of the second plurality 13b comprises fabric composite material.

In another example, at least one of the layers 130, 131, 230, and 231 of the first plurality 13a and of the second plurality 13b comprises unidirectional composite material.

In another example, at least one of the layers 130, 131, 230, and 231 of the first plurality 13a and of the second plurality 13b comprises fabric composite material, while at least another layer of the layers 130, 131, 230, and 231 of the first plurality 13a and of the second plurality 13b comprises unidirectional composite material.

Optionally, at least two layers 130 and 131 of the first plurality 13a of layers comprise a fabric composite material, wherein the orientation of the fabric lattice of one layer, for example layer 130, forms an angle with the orientation of the fabric of another layer, for example layer 131. Optionally, the first plurality 13a of layers comprises a layer of unidirectional composite material.

Optionally, at least two layers 230 and 231 of the second plurality 13b of layers comprise a fabric composite material, wherein the orientation of the fabric lattice of one layer, for example layer 230, forms an angle with the orientation of the fabric of another layer, for example layer 231. Optionally, the second plurality 13b of layers comprises a layer of unidirectional composite material.

In the examples mentioned above, the term "fibers" is intended to mean carbon fibers, glass fibers, or fibers made of another material. Furthermore, the term "orientation" of a fiber fabric is intended to identify any of the lines comprising one of the sides of the quadrangles forming the fabric.

The different orientation of two fabric layers of the first plurality 13a or of the second plurality 13b of layers makes it possible to provide the inner ring 13, and therefore the sprocket 10, with high resistance to stresses, forces, and torques exerted by the driving element, since the fiber fabric of each of the layers 130, 131 makes it possible to convey and therefore withstand forces, stresses, and torques acting from different directions.

In all the preceding examples, at least a portion of the layers of the first and/or of the second plurality of layers comprises at least one hole 15b corresponding to the at least one engagement element 15a.

Optionally, each layer of the first plurality 13a and of the second plurality 13b of layers comprises at least one hole 15b corresponding to the at least one engagement element 15a, so that, when the layers are superposed to form the inner ring 13, the at least one hole of each layer overlaps the at least one hole of the other layers of the first plurality 13a and of the second plurality 13b, thereby forming the engagement element 15a.

In all the preceding examples, the layers 130, 131, 230, and 231 of the first plurality 13a and/or of the second plurality 13b of layers have a shape substantially corresponding to a circular crown, as schematically shown in Figure 5, characterized by an inner diameter and an outer diameter, except, possibly, for one or more protrusions corresponding to the at least one engagement element 15a.

Furthermore, in all the preceding examples, the layers 130, 131, 230, and 231 forming one of the first plurality 13a and the second plurality 13b of layers, or both, may have different dimensions from one another. In other words, one layer among the layers 130, 131, 230, and 231 may define substantially a circular crown, or a section thereof, having an inner or outer diameter greater or smaller than that of an adjacent layer among the layers 130, 131, 230, and 231.

In one example, shown in Figure 6, the inner ring 13 comprises a reinforcing element 16 positioned at the at least one engagement element 15a in order to provide greater resistance to the stresses, forces, and torques exerted by the driving element.

The reinforcing element 16 comprises a material having greater resistance to linear forces than the second material. Examples of reinforcing elements 16 may consist of plates made of composite material having a fiber density greater than the density of the second material, or of metallic elements.

In one example, shown in Figure 6, the reinforcing element 16, shown in panel a), comprises an elongated, filiform element, substantially a strip, made of unidirectional composite material. The reinforcing element 16 defines a longitudinal direction and a transverse direction and has a dimension along the longitudinal direction much greater than the dimension measured along the transverse direction. The fibers of the composite material of the reinforcing element 16 are arranged parallel to the longitudinal direction. Such a reinforcing element 16 provides particular resistance to forces and stresses exerted along the longitudinal direction.

The positioning of the reinforcing element 16, being a filiform element, namely a strip, is schematically shown in panel b) of Figure 6.

When the second material comprises a plurality of layers, the reinforcing element 16 is arranged between two layers along an inner profile PI of the inner ring 13 so as to at least partially surround all the engagement elements 15a and to perform at least one turn around the inner profile of the inner ring 13.

Optionally, the reinforcing element 16 performs a plurality of turns, preferably at least two, around the inner profile of the inner ring 13.

The reinforcing element 16, arranged circumferentially at the inner profile of the inner ring 13 so as to form a closed shape, has the function of reinforcing the resistance of the sprocket 10 to the forces and torques imparted by the driving element.

In the case where the second material comprises one or more pluralities 13a, 13b of layers, as shown in Figure 5, the reinforcing element 16 is interposed between two layers of the first plurality 13a or of the second plurality 13b of layers.

Optionally, the reinforcing element 16 is interposed between a layer 130, 131 arranged at the inner face 10a of the sprocket 10 and a layer 230, 231 arranged at the outer face 10b of the sprocket 10.

It will be clear to a person skilled in the art that the number of layers forming the inner ring 13, and in particular the first plurality 13a and/or the second plurality 13b, is not limited to the number of layers schematically shown in Figure 5.

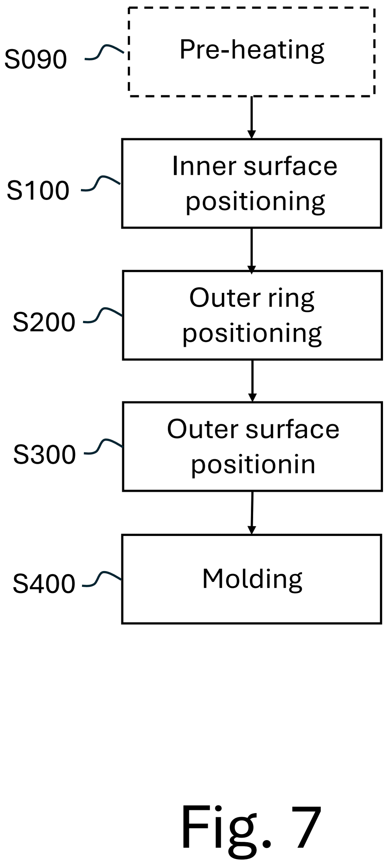

Figure 7 shows a block diagram of a process for manufacturing a sprocket 10 comprising an outer ring 12 and an inner ring 13, as shown in Figures 2 to 6 and as described in the text.

The manufacturing process of the sprocket 10, shown in Figure 7, comprises a first step, S100, of positioning in a mold the material, namely the second material, that forms a first surface of the inner ring 13, for example corresponding to the inner surface or to the outer surface of the inner ring 13.

By inner or outer surface of the inner ring 13 there is meant, respectively, the surface substantially parallel to the plane of the sprocket 10 and corresponding to the inner face 10a or to the outer face 10b of the sprocket 10, i.e., the surface of the inner ring 13 facing, when the sprocket 10 is mounted on the bicycle, respectively the bicycle frame or the outside of the bicycle, i.e., toward the crank arm or the spider.

In this step, one layer or a first plurality 13a of layers, corresponding to the inner or outer surface of the inner ring 13 of the sprocket 10, are positioned in a mold, more precisely on a substantially horizontal base surface of the mold.

In the subsequent phase, step S200, corresponding to the positioning of the outer ring 12, the outer ring 12 is placed in the mold above the first layer or the first plurality 13a of layers positioned in step S100 for positioning the first surface of the inner ring. In this phase, the outer ring 12 is placed above the first layer or the first plurality 13a of layers corresponding to the first surface of the inner ring 13 so that the coupling region 14, and therefore the through holes 14a, overlap the first layer or the first plurality 13a of layers already present in the mold.

Subsequently, in the step S300 of positioning the second surface of the inner ring 13, the material forming the second surface of the inner ring 13, namely a second layer or a second plurality 13b of layers, is positioned on the outer ring 12. The second surface of the inner ring 13 corresponds to the outer surface or to the inner surface of the inner ring 13. It will be clear to a person skilled in the art that, if the first surface corresponds to the inner surface of the inner ring 13, the second surface corresponds to the outer surface of the inner ring 13, and vice versa.

In other words, the second layer or the second plurality 13b of layers corresponding to the second surface of the inner ring 13 of the sprocket 10 are positioned above the outer ring 12 already present in the mold.

In particular, the second layer or the second plurality 13b of layers corresponding to the second surface of the inner ring 13 are placed on the outer ring 12 already present in the mold so as to cover the coupling region 14 and therefore the through holes 14a.

The mold comprises lateral surfaces rising from the base surface and dimensioned so as to exceed, in height, the second layer or the second plurality 13b of layers corresponding to the second surface of the inner ring 13 when these are placed in the mold above the outer ring 12. In other words, the mold is dimensioned so as to completely contain the first layer or the first plurality 13a of layers forming the first surface of the inner ring 13, the outer ring 12, and the second layer or the second plurality 13b of layers forming the second surface of the inner ring 13.

The layers 130, 131, 230, 231 of the first plurality 13a and of the second plurality 13b of layers are pre-cut in a shape suitable for forming, at the end of the molding process, the inner ring 13. Furthermore, each layer 130, 131, 230, 231 of the first 13a and the second 13b plurality of layers is cut so as to create the at least one hole 15b of the at least one engagement element 15a.

During the manufacturing process, the layers 130, 131, 230, 231 of the first 13a and the second 13b plurality of layers are positioned in the mold so as to align the at least one hole 15b in order to form the at least one engagement element 15a.

Figure 6 shows an example of a sprocket 10 in which a reinforcing element 16 is optionally present. The reinforcing element is shown alone in panel a) and incorporated in the sprocket 10 in panel b). Panel b) shows the reinforcing element 16 visible from the outside. However, the representation shown in Figure 6 is provided only for descriptive purposes, since, as described previously, the reinforcing element 16 is generally embedded in the second material of the inner ring 13 and is therefore not visible from the outside.

The reinforcing element 16 is placed above the second plurality 13b of layers or interposed between two layers of the first plurality 13a or of the second plurality 13b of layers or, alternatively, positioned between two layers of the first plurality 13a or of the second plurality 13b of layers.

The reinforcing element 16 is arranged so as to form a closed shape that at least partially surrounds all the holes 15b of the engagement elements 15a and to perform at least one turn around the inner profile of the layer 130, 131, 230, 231 on which it is positioned. Optionally, the reinforcing element 16 is arranged so as to perform a plurality of turns, optionally two turns, around the inner profile of the layer 130, 131, 230, 231 on which it is positioned.

Once the second layer or the second plurality 13b of layers are arranged above the outer ring 12 in the mold, the process comprises the molding step S400. In this phase, pressure is applied to the elements present in the mold, optionally including the reinforcing element 16. The pressure is applied by means of, for example, a piston entering the mold and acting on the assembly of the inner ring 13, considering all the layers 130, 131, 230, 231, and the outer ring 12 interposed between said layers 130, 131, 132, 230, 231.

The mold is furthermore brought to a temperature between 90°C and 150°C, preferably between 100°C and 140°C, even more preferably between 110°C and 130°C, in order to cure the layers forming the inner ring 13.

In an optional phase, the outer ring 12 is optionally pre-heated in step S090, before being inserted into the mold in step S200 for positioning the outer ring 12.

During the molding phase S400, the second material forming the inner ring 13, that is, the material forming the first and second layers or the first plurality 13a or the second plurality 13b of layers, penetrates into the openings 14a of the outer ring 12.

When the second material, i.e., the first or second layer or the layers 130, 131, 230, and 231 of the first plurality 13a and of the second plurality 13b of layers, is a composite material, the polymer, or resin, and the fibers penetrate completely into the openings 14a of the outer ring 12, creating a continuous structure of polymer, or resin, and fibers that makes it possible to irreversibly fix the outer ring 12 to the inner ring 13.

At the end of the molding phase S400, the produced sprocket 10 is removed from the mold and subjected to finishing treatments and inspection operations.

## Claims

1. A bicycle sprocket (10) comprising:
an outer ring (12) comprising a first material and including:
- a plurality of teeth (11) formed along an outer circumference (CE) of the outer ring (12),
- a plurality of through holes (14a) formed in a region of the outer ring (12) located at a distance from the center of the sprocket (10) less than the radius of the outer circumference (CE);
an inner ring (13) comprising a second material, different from and lighter than the first material, and a connection portion (15) configured to fix the inner ring (13) to a spider or a crank arm,
wherein the inner ring (13) extends into the through holes (14a) and is permanently fixed to the outer ring (12) without the use of external fastening elements, and
**characterized in that**
the connection portion (15) is entirely made from the second material and does not include the first material.

2. The sprocket (10) according to claim 1, wherein the plurality of through holes (14a) is formed in a coupling region (14) of the outer ring (12) that extends from a minimum distance (Rmin) to a maximum distance (Rmax) from the centre of the sprocket (10), with the maximum distance (Rmax) being less than or equal to the radius of the outer circumference (CE) of the outer ring (12).

3. The sprocket (10) according to claim 2, wherein the inner ring (13), when viewed from a direction perpendicular to the plane of the sprocket (10), at least partially overlaps the coupling region (14) of the outer ring (12).

4. The sprocket (10) according to any of the preceding claims, wherein the second material comprises a composite material and the first material comprises a metal, optionally aluminum, titanium, or steel.

5. The sprocket (10) according to claim 4, wherein the second material comprises a fiber-reinforced polymer, optionally a thermoplastic polymer with fibers, optionally carbon fibers or glass fibers.

6. The sprocket (10) according to claim 5, wherein the second material comprises a plurality of layers (130, 131, 230, 231).

7. The sprocket (10) according to claim 6, wherein the outer ring (12) is interposed between two layers (130, 131, 230, 231) of the plurality of layers.

8. The sprocket (10) according to claim 7, wherein the second material of one of the two layers (130, 131, 230, 231) between which the outer ring (12) is interposed penetrates the through holes (14a) and forms a continuous structure with the second material of the other of the two layers (130, 131, 230, 231).

9. The sprocket (10) according to claim 8, wherein the continuous structure comprises the polymer and the fibers of the second material.

10. The sprocket (10) according to any of the preceding claims, wherein the connection portion (15) comprises at least one coupling element (15a) configured to secure the sprocket (10) to a spider or crank arm.

11. The sprocket (10) according to any of the preceding claims, further comprising a reinforcement element (16), being a filament-like element arranged along an inner profile (PI) of the inner ring (13).

12. The sprocket (10) according to claim 11, wherein the reinforcement element (16) is arranged along the inner profile (PI) of the inner ring (13) so as to form a closed loop.

13. The sprocket (10) according to claim 12, wherein the reinforcement element (16) is arranged along the inner profile (PI) of the inner ring (13) so as to make multiple turns, optionally two turns, around the inner profile (PI).

14. A method for manufacturing the sprocket (10) according to any of the preceding claims, the method comprising:
- positioning (S100) at least a first layer (130, 131, 230, 231) of the second material in a mold;
- positioning (S200) the outer ring (12) in the mold on top of the at least first layer of the second material;
- positioning (S300) at least a second layer (130, 131, 230, 231) of the second material in the mold on top of the outer ring (12) ;
- applying pressure (S400), by means of a piston, to the at least first layer, the at least second layer, and the outer ring (12).

15. The method according to claim 14, wherein positioning (S300) at least a second layer of the second material in the mold on top of the outer ring (12) comprises positioning a plurality (13a, 13b) of layers (130, 131, 230, 231) and placing a reinforcement element (16), being a filament-like element arranged along an inner profile (PI) of the inner ring (13), between two of the layers.
